# EUROPÄISCHE PATENTSCHRIFT

(11) **EP 0 824 154 B1**
(45) Veröffentlichungstag und Bekanntmachung des Hinweises auf die Patenterteilung: **08.05.2002**
(21) Anmeldenummer: 97810524.5
(22) Anmeldetag: 23.07.1997
(51) Int. Cl.: C25D 11/18, G02B 1/10

(54) **Reflektor mit resistenter Oberfläche**
Reflector with resistant surface
Réflecteur avec surface résistante

(30) Priorität: 15.08.1996 CH 200196; 03.09.1996 CH 216596
(43) Veröffentlichungstag der Anmeldung: 18.02.1998
(73) Patentinhaber: Alcan Technology & Management AG, 8212 Neuhausen am Rheinfall (CH)
(72) Erfinder: Fuchs, Roman, 8200 Schaffhausen (CH); Schottner, Gerhard, 91560 Heilsbronn (DE); Sandrock, Johannes Martin, 97204 Höchberg (DE)

(56) Entgegenhaltungen:
- EP-A- 0 358 011
- EP-A- 0 495 755
- EP-A- 0 568 943
- EP-A- 0 610 831
- FR-A- 1 247 882
- GB-A- 890 465
- US-A- 3 274 078
- US-A- 5 356 492

## Beschreibung

Vorliegende Erfindung betrifft einen Reflektor, enthaltend eine gegen mechanische und chemische Angriffe resistente Oberfläche mit hoher Gesamtreflexion, wobei der Reflektorkörper wenigstens eine freie Oberfläche aus Aluminium oder einer Aluminiumlegierung aufweist und auf der freien Oberfläche, als Oberflächenschicht, ein Schichtsystem aus
b) einer funktionellen Beschichtung mit organofunktionellen Silanen einer Metallverbindung und darauf abgeschieden
c) eine metallhaltigen Reflexionsschicht enthält,
und die Schicht b) eine Einebnung und eine Erhöhung der mechanischen Beständigkeit der darüber liegenden Schicht c) bewirkt.

Es ist bekannt, Bänder in Glänzwerkstoffen, z.B. Reinstaluminium oder AlMg-Legierungen auf Basis von Aluminium mit einem Reinheitsgrad von 99,8 % und grösser, wie z.B. 99,9 %, und Walzoberflächen, die diffuse oder gerichtete Lichtreflexion erzeugen, je nach Anwendung, herzustellen. Es ist auch bekannt, zur Erhöhung der gerichteten Reflexion (Glanzgrad) die Oberflächen von solchen Bändern chemisch oder elektrolytisch zu glänzen und anschliessend durch anodische Oxidation eine Schutzschicht von z.B. 1,5 µm Schichtdicke zu erzeugen.

Anodisierungen sind chemische Behandlungen, welche den Nachteil haben, grosser Aufwendungen zu bedürfen, um Umweltbelastungen zu vermeiden. Entsprechend der Stärke der Anodisierschicht nehmen diese Aufwendungen zu.

Die bekannten Verfahren haben den weiteren Nachteil, dass hochreine und teure Glänzlegierungen auf Basis von Reinstaluminium eingesetzt werden müssen. Durch die anodische Oxidschicht sinkt der Reflexionsgrad der Oberfläche und dabei sowohl die Gesamtreflexion wie auch die gerichtete Reflexion durch Absorption und diffuse Lichtstreuung, insbesondere in der Oxidschicht. Dies bedeutet einen Energieverlust.

Aus der EP-A-0 495 755 sind Gegenstände mit Oberflächen aus Aluminium bekannt geworden, welche geeignet sind für die Abscheidung von Schichtsystemen aus der Gasphase auf diesen Oberflächen. Auf eine Anodisierung der Oberflächen wird verzichtet, und es wird ein Schichtsystem aus beispielsweise einer Haftschicht, wie einer Keramikschicht, einer Lichtreflexionsschicht, wie einer metallischen Schicht, z.B. aus Aluminium, und einer oder mehreren transparenten Schutzschichten aus Metallverbindungen beschrieben. Solche Schichtsysteme weisen einen hohen Reflexionsgrad auf. Die Nachteile einer Anodisierung werden dabei vermieden. Ein derartiges Schichtsystem hat jedoch den Nachteil, dass die Oberflächen sehr empfindlich gegen physikalischen, wie mechanischen, oder chemischen, wie korrosiven, Einfluss sind.

Die EP-A-0 568 943 beschreibt die Abscheidung einer Reflexionsschicht auf einer Basisschicht aus Aluminium oder Aluminiumlegierung und einem Gel-Film, welcher durch ein Sol-Gel-Verfahren auf dem Aluminium abgeschieden worden ist. Auch dies ist eine Möglichkeit, zu reflektierenden Aluminiummaterialien zu gelangen, ohne eine Anodisierung anwenden zu müssen, jedoch ist der in der EP-A 0 568 943 beschriebene Schichtaufbau gegen mechanische Beanspruchung und Korrosion nicht in gewünschtem Masse resistent.

Aufgabe vorliegender Erfindung ist es, die genannten Nachteile zu vermeiden und Reflektoren vorzuschlagen, die auf ihrer Oberfläche oder auf einem Teil ihrer Oberfläche eine reflektionserhöhende Schicht aufweisen. Die Aluminiumsubstrate und insbesondere die reflexionserhöhende Schicht soll gegen physikalische, wie mechanische, und chemische, wie korrosive, Einwirkungen äusserst resistent sein.

Erfindungsgemäss wird dies mittels eines Reflektor gemäss Anspruch 1 erreicht.

Als Reflektorkörper können alle räumlichen Gebilde, die wenigstens eine freie Oberfläche aus einem Metall, wie Aluminium oder Aluminiumlegierung, aufweisen, zur Anwendung gelangen. Diese freie Oberfläche ist beispielsweise ein Aluminium mit einer Reinheit von 98,3 % und höher, fallweise auch mit einer Reinheit von zweckmässig 99,0 % und höher, bevorzugt 99,9 % und höher und insbesondere 99,95 % und höher. Neben Aluminium genannter Reinheiten kann die Oberfläche auch eine Legierung darstellen. Bevorzugte Legierungen sind diejenigen der Klassen AA 1000, AA 3000 und AA 5000. Weitere bevorzugte Legierungen enthalten beispielsweise 0,25 bis 5 Gew.-%, insbesondere 0,5 bis 4 Gew.-% Magnesium oder enthaltend 0,2 bis 2 Gew.-% Mangan oder enthaltend 0,5 bis 5 Gew.-% Magnesium und 0,2 bis 2 Gew.-% Mangan, insbesondere z.B. 1 Gew.-% Magnesium und 0,5 Gew.-% Mangan oder enthaltend 0,1 bis 12 Gew.-%, vorzugsweise 0,1 bis 5 Gew.-% Kupfer oder enthaltend 0,5 bis 6 Gew.-% Zink und 0,5 bis 5 Gew.-% Magnesium oder enthaltend 0,5 bis 6 Gew.-% Zink, 0,5 bis 5 Gew.-% Magnesium und 0,5 bis 5 Gew.-% Kupfer oder enthaltend 0,5 bis 2 Gew.-% Eisen und 0,2 bis 2 Gew.-% Mangan, insbesondere z.B. 1,5 Gew.-% Eisen und 0,4 Gew.-% Mangan oder AlMgSi-Legierungen oder AlFeSi-Legierungen.

Besonders bevorzugte Oberflächen sind beispielsweise aus Aluminium mit einer Reinheit von 99,5 % und höher, 99,8 % und höher, 99,85 % oder Oberflächen aus einer Aluminiumlegierung, enthaltend 0,5 Gew.-% Magnesium oder enthaltend 1 Gew.-% Magnesium oder enthaltend Aluminium einer Reinheit von 99 % und 5 bis 10, insbesondere 7 Gew.-% Magnesium und 6 bis 12 und insbesondere 8 Gew.-% Kupfer. Besonders bevorzugt sind auch alle Aluminium-Legierungen, die walzbar sind.

Beispiele von Reflektorkörpem sind Guss- und Schmiedeteile und insbesondere Walzprodukte, wie Folien, Bänder, Platten, Bleche, die gegebenenfalls durch Biegen, Tiefziehen, Kaltfliesspressen und dergleichen umgeformt sein können. Ferner können Profile, Balken oder andere Formen angewendet werden. Je nach Einsatzzweck kann der ganze Reflektorkörper aus dem genannten Aluminium oder der Aluminiumlegierung sein, es können aber auch nur Teilbereiche oder Oberflächenbereiche daraus bestehen.

Das genannte Aluminium oder die Aluminiumlegierung kann auch Teil und dabei wenigstens eine Oberfläche oder nur eine Teiloberfläche eines Verbundes darstellen, z.B. eines Folienverbundes oder Laminates oder eines anderen Substrates beliebiger Werkstoffe, wie z.B. Kunststoff, Metall, wie Al-beschichtetes Eisen- oder Stahlblech, oder Keramik.

Die Aluminiumoberflächen können beispielsweise durch chemische und/oder mechanische Veränderung der Oberfläche, wie z.B. Walzen, Schmieden, Kaltfliesspressen, Pressen oder Giessen erzeugt werden und eine Nachbehandlung durch Schleifen, Polieren, Strahlen mit Hartstoffen usw. kann sich anschliessen. Bevorzugt sind Walzoberflächen, die mit glatten oder strukturierten Walzen erzeugt werden. Die Oberflächen können beispielsweise zwischen einzelnen, mehreren oder allen Walzvorgängen (Stichen) gereinigt werden, dies insbesondere um den Walzabrieb zu entfernen. Die Reinigung der Oberfläche kann auf an sich bekannte Weise, z.B. chemisch und/oder elektrochemisch und sauer oder alkalisch, erfolgen.

Bevorzugt als Reflektorkörper sind Aluminiumbleche oder Al-beschichtetes Eisen- oder Stahlblech in einer Dicke von beispielsweise 0,2 bis 0,8 mm, zweckmässig 0,3 bis 0,7 mm und vorzugsweise 0,5 mm. Ein Beispiel ist ein A4-Aluminiumblech Al 99,5 (Reinheit 99,5%) der Dicke von 0,5 mm. Werden zum Walzen strukturierte Walzenoberflächen vorgesehen, so kann die Walzoberfläche beispielsweise auf chemischem, physikalischem oder mechanischem Wege strukturiert sein, beispielsweise durch Drehen, durch Schleifen, durch Gravieren auch von Hand, durch Elektronenstrahl-Erosion, durch Laserstrahl-Erosion, durch elektrolytische Erosion oder durch Strahlen mit Hartkörpern.

Die Aluminiumoberflächen können auch einem chemischen oder elektrochemischen Glänzverfahren oder einem alkalischen Beizprozess unterzogen werden. Solche Glänz- oder Beizverfahren werden vor dem Anodisieren angewendet.

Die Aluminiumoberflächen können eine Oberflächenrauhigkeit Rₐ von beispielsweise 0,01 bis 5 µm und bevorzugt von 0,01 bis 0,5 µm aufweisen. Weitere vorteilhafte bevorzugte Rauhigkeiten Rₐ sind von 0,01 bis 0,4 µm und insbesondere von 0,03 bis 0,06 µm, wobei 0,04 µ m ganz besonders geeignet ist. Die Oberflächenrauhigkeit Rₐ ist definiert in wenigstens einer der DIN-Vorschriften 4761 bis 4768.

Erfindungsgemäss sind beim vorliegenden Reflektor zwischen dem Reflektorkörper und der reflektierenden Schicht c) Zwischenschichten angeordnet, nämlich eine Schicht a), eine Vorbehandlungsschicht z.B. in Form einer Schicht aus anodisch oxidiertem Aluminium, und eine Schicht b) in Form einer funktionellen Beschichtung mit organofunktionellen Silanen einer Metallverbindung, z.B. in Form einer Sol-Gel-Schicht.

Die Vorbehandlungsschicht a) ist eine durch anodische Oxidation erzeugte Schicht. Vorzugsweise wird die Vorbehandlungsschicht aus anodisch oxidiertem Aluminium direkt aus dem an der Oberfläche des Reflektorkörpers liegenden Aluminium erzeugt. Die Vorbehandlungsschicht a) kann eine Dicke von zweckmässig wenigstens 50 nm, bevorzugt von wenigstens 100 nm und besonders bevorzugt von wenigstens 150 nm (Nanometer) aufweisen. Die grösste Dicke der Vorbehandlungsschicht a) kann bevorzugt 200 nm (Nanometer) betragen. Somit weist die Vorbehandlungsschicht a) bevorzugt eine Dicke von 100 nm bis 200 nm auf.

Die Vorbehandlungschicht a) ist alternativ eine anodisch erzeugte Oxidschicht, die in einem rücklösenden oder nicht rücklösenden Elektrolyten aufgebaut wurde. Die Vorbehandlungschicht a) kann auch eine Gelbchromatierschicht, eine Grünchromatierschicht, eine Phosphatschicht oder eine chromfreie Vorbehandlungschicht, die in einem Elektrolyten, enthaltend wenigstens eines der Elemente Ti, Zr, F, Mo oder Mn, aufgewachsen ist, enthalten.

Die Herstellung einer bevorzugten anodisch oxidierten Schicht, wie einer Aluminiumschicht, bedingt beispielsweise eine saubere Aluminiumoberfläche, d.h. eine anodisch zu oxidierende Aluminiumoberfläche muss üblicherweise vorgängig zur elektrolytischen Oxidation einer Oberflächenbehandlung, der sogenannten Vorbehandlung, zugeführt werden.

Die Aluminiumoberflächen weisen meist eine natürlich entstehende Oxidschicht auf, die häufig aufgrund ihrer Vorgeschichte durch Fremdsubstanzen verunreinigt ist. Solche Fremdsubstanzen können beispielsweise Reste von Walzhilfsmitteln, Transportschutzölen, Korrosionsprodukte oder eingepresste Fremdpartikel und ähnlichem sein. Zum Zwecke der Entfernung solcher Fremdsubstanzen werden die Aluminiumoberflächen üblicherweise mit Reinigungsmitteln, die einen gewissen Beizangriff ausüben, chemisch vorbehandelt. Dazu eignen sich -- neben sauren wässrigen Entfettungsmitteln -- insbesondere alkalische Entfettungsmittel auf Basis Polyphosphat und Borat. Eine Reinigung mit mässigem bis starkem Materialabtrag bildet das Beizen oder Aetzen mittels stark alkalischen oder sauren Beizlösungen, wie z.B. Natronlauge oder ein Gemisch aus Salpetersäure und Flusssäure. Dabei werden die natürliche Oxidschicht und damit auch alle darin eingebauten Verunreinigungen entfernt. Bei Verwendung von stark angreifenden alkalischen Beizen entstehen oft Beizbeläge, die durch eine saure Nachbehandlung entfernt werden müssen. Eine Reinigung ohne Oberflächenabtrag bildet das Entfetten der Oberflächen durch Anwendung organischer Lösungsmittel oder wässriger oder alkalischer Reiniger.

Weitere Reinigungsverfahren sind das Entfetten der Aluminiumoberfläche mittels Plasmaoxidation, durch Koronaentladung oder durch Reinigung im Schutzgasplasma, wie Ar, He, Ne, N₂ usw.

Je nach Oberflächenzustand ist auch ein mechanischer Oberflächenabtrag durch abrasive Mittel notwendig. Eine solche Oberflächenvorbehandlung kann beispielsweise durch Schleifen, Strahlen, Bürsten oder Polieren geschehen und gegebenenfalls durch eine chemische Nachbehandlung ergänzt werden.

Zur weiteren Behandlung im Rahmen der anodischen Oxidation wird der Reflektorkörper anschliessend mit wenigstens dem zu oxidierenden Teil der Aluminiumschicht in eine elektrisch leitende Flüssigkeit, den Elektrolyten, gegeben und als Anode an einer Gleichspannungsquelle angeschlossen, wobei als negative Elektrode üblicherweise rostfreier Stahl, Graphit, Blei oder Aluminium verwendet wird.

Im Falle eines nicht rücklösenden Elektrolyten kann der Elektrolyt derart beschaffen sein, dass er das während dem Anodisierprozess gebildete Aluminiumoxid chemisch nicht auflöst, d.h. es findet keine Rücklösung des Aluminiumoxids statt. Im Gleichspannungsfeld entwikkelt sich an der Kathode Wasserstoffgas und an der Anode Sauerstoffgas. Der an der Aluminiumoberfläche entstehende Sauerstoff bildet durch Reaktion mit dem Aluminium eine während dem Prozess zunehmend dickere Oxidschicht. Da der Schichtwiderstand mit zunehmender Dicke der Sperrschicht schnell ansteigt, nimmt der Stromfluss entsprechend schnell ab und das Schichtwachstum hört auf.

Die elektrolytische Herstellung von derartigen Schichten a) erlaubt die präzise Kontrolle der entsprechenden Schichtdicken. Die maximal erzielte Schichtdicke der Aluminiumoxid-Sperrschicht in Nanometer (nm) entspricht in erster Näherung der angelegten und in Volt (V) gemessenen Spannung, d.h. die maximal erzielte Schichtdicke steht in linearer Abhängigkeit zur Anodisierspannung, wobei der Spannungsabfall an der Deckschicht berücksichtigt werden muss. Der exakte Wert der maximal erreichten Schichtdicke in Abhängigkeit der angelegten Gleichspannung *U* und unter Berücksichtigung des Spannungsabfalles an der Deckschicht kann durch einen einfachen Vorversuch bestimmt werden und liegt von 1.2 bis 1.6 nm/V, wobei der genaue Werte der Schichtdicke in Funktion der angelegten Spannung abhängig ist vom verwendeten Elektrolyten, d.h. dessen Zusammensetzung sowie dessen Temperatur.

Um dem sich zeitlich verändernden Spannungsabfall an der Deckschicht Rechnung zu tragen, kann die Anodisierspannung im Verlaufe des Anodisierprozesses kontinuierlich oder stufenweise erhöht werden. Die optimale Anodisierspannung bzw. der optimale zeitliche Anodisierspannungsverlauf sowie die Anodisierdauer kann entweder durch einfache Vorversuche oder durch eine während dem Anodisierprozess durchzuführende Reflexionsmessung bestimmt werden.

Die elektrolytische Oxidation kann in einem Arbeitsgang durch Anlegen einer vordefinierten Anodisierspannung oder durch kontinuierliches oder stufenweises Erhöhen der Anodisierspannung auf einen vorbestimmten Wert oder auf einen Wert, der durch Messung der optimalen Reflexionseigenschaften bestimmt wird, geschehen. Die elektrolytische Oxidation kann jedoch auch in mehreren Schritten, d.h. in mehreren Arbeitsgängen, beispielsweise mit unterschiedlichen Anodisierspannungen, geschehen.

Beispielsweise bei der Verwendung eines nicht rücklösenden Elektrolyten sind die Aluminiumoxid-Sperrschichten nahezu porenfrei, d.h. allfällig auftretende Poren resultieren beispielsweise aus Verschmutzungen im Elektrolyten oder aus Gefüge-Fehlstellen in der Aluminium-Oberflächenschicht, jedoch nur unwesentlich durch Auflösung des Aluminiumoxids im Elektrolyten.

Derart hergestellte Schichten a) können mit einer genau vorgegebenen Schichtdicke versehen, porenfrei, homogen und bezüglich der elektromagnetischen Strahlung, insbesondere im sichtbaren und/oder infraroten Bereich, transparent, sein.

Als nicht rücklösende Elektrolyten können im Verfahren beispielsweise organische oder anorganische Säuren, in der Regel verdünnt mit Wasser, mit einem pH-Wert von 2 und grösser, bevorzugt 3 und grösser, insbesondere 4 und grösser und 7 und kleiner, bevorzugt 6 und kleiner, insbesondere 5.5 und kleiner, verwendet werden. Bevorzugt werden kalt, d.h. bei Raumtemperatur, arbeitende Elektrolyten. Besonders bevorzugt werden anorganische oder organische Säuren, wie Schwefel- oder Phosphorsäure in niedriger Konzentration, Borsäure, Adipinsäure, Zitronensäure oder Weinsäure, oder Gemische davon, oder Lösungen von Ammonium- oder Natriumsalzen von organischen oder anorganischen Säuren, insbesondere der namentlich genannten Säuren und deren Gemische. Dabei weisen die Lösungen bevorzugt eine Konzentration von total 20 g/l oder weniger, zweckmässig 2 bis 15 g/l, von im Elektrolyten gelöstem Ammonium- oder Natriumsalz auf. Ganz besonders bevorzugt werden dabei Lösungen von Ammoniumsalzen der Zitronen- oder Weinsäure oder Natriumsalzen der Phosphorsäure.

Ein ganz besonders bevorzugter Elektrolyt enthält 1 bis 5 Gew.-% Weinsäure, welcher beispielsweise eine zur Einstellung des gewünschten pH-Wertes entsprechende Menge Ammoniumhydroxid (NH₄OH) beigegeben werden kann.

Die Elektrolyte sind in der Regel wässrige Lösungen.

Die maximal mögliche Anodisierspannung wird durch die Spannungsfestigkeit des Elektrolyten bestimmt. Diese ist beispielsweise von der Elektrolytzusammensetzung und von der Elektrolyttemperatur abhängig und liegt üblicherweise im Bereich zwischen 300 und 600 Volt.

Die für das Anodisierverfahren optimale Elektrolyttemperatur hängt vom verwendeten Elektrolyten ab; ist aber im allgemeinen für die Qualität der erhaltenen Schichten c) von untergeordneter Bedeutung. Für das Anodisierverfahren werden Temperaturen von 15 bis 40 °C und insbesondere solche zwischen 18 und 30 °C bevorzugt.

Bevorzugt wird beim Anodisieren eine anodische Oxidschicht in einem nicht rücklösenden Elektrolyten aufgebaut und nicht verdichtet.

Als rücklösende Elektolyten können beispielsweise anorganische oder organische Säuren, -- in der Regel verdünnt mit Wasser -- wie Schwefelsäure, Phosphorsäure, Oxalsäure, Chromsäure etc. sowie Kombinationen daraus verwendet werden. Die Anodisierspannungen, welche als Gleichstrom oder Wechselstrom an die zu anodisierende Oberfläche angelegt werden, werden in der Regel so gewählt, dass Stromdichten von ca. 0,1-10 A/dm² auf den Oberflächen erhalten werden. Die porigen Strukturen welche mit rücklösenden Elektrolyten erzeugt werden, können anschliessend in heissem Wasser oder Dampf mit oder ohne chemische Zusätze verdichtet werden. Besonders haftfeste Oberflächen werden jedoch mit nicht verdichteten, sondern nur mit Wasser gespülten und getrockneten anodischen Oxidschichten erhalten.

Ein besonders geeignetes Anodisationsverfahren in einem rücklösenden Elektrolyten stellt das Gleichstrom-Schwefelsäure (GS) - Verfahren ohne Verdichten dar.

Auf die Schicht a) aus anodisch oxidiertem Aluminium wird die Schicht b), eine funktionelle Beschichtung mit organofunktionellen Silanen einer Metallverbindung, z.B. in Form einer Sol-Gel-Schicht, aufgebracht.

Zweckmässig weist die Schicht b) eine Dicke von 1 bis 20 µm, bevorzugt von 2 bis 10 µm und besonders bevorzugt von 2 bis 5 µm auf.

Die funktionelle Beschichtung b) mit organofunktionellen Silanen einer Metallverbindung wird durch hydrolytische Kondensation von folgenden Komponenten erhalten, gegebenenfalls in Gegenwart eines Kondensationskatalysators und/oder üblichen Additiven:
1. mindestens einem vernetzbaren organofunktionellen Silan der Formel (II):

   R"'ₘSiX₍₄₋ₘ₎ (II)

   in der die Gruppen X, die gleich oder verschieden sein können, Wasserstoff, Halogen, Alkoxy, Acyloxy, Alkylcarbonyl, Alkoxycarbonyl oder -NR" ₂ (R" = H und /oder Alkyl) bedeuten und die Reste R"', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S- Atome oder die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1,2 oder 3 hat, und/oder einem davon abgeleiteten Oligomeren, wobei der Rest R"' und/oder der Substituent ein vernetzbarer Rest bzw. Substituent sein muss, in einer Menge von 10 bis 95 Mol-%, bezogen auf die Gesamtmolzahl der (monomeren) Ausgangskomponenten;
2. mindestens einer Metallverbindung der allgemeinen Formel m:

   MeR_{y} (III)

   in welcher Me ein Metall, ausgewählt aus der Gruppe Al, Zr, Ti ist, wobei y im Falle von Aluminium 3 und im Falle von Ti und Zr 4 ist und die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und /oder einem davon abgeleiteten Oligomeren und/oder einem gegebenenfalls komplexierten Aluminiumsalz einer anorganischen oder organischen Säure, in einer Menge von 5 bis 75 Mol-%, bezogen auf die Gesamtmolzahl der (monomeren) Ausgangskomponenten,
3. gegebenenfalls mindestens einem nicht vernetzbaren organofunktionellen Silan der Formel I:

   R'ₘSiX₍₄₋ₘ₎ (I)

   in der die Gruppen X, die gleich oder verschieden sein können, Wasserstoff, Halogen, Hydroxy, Alkoxy, Acyloxy, Alkylcarbonyl, Alkoxycarbonyl oder -NR" ₂(R" = H und /oder Alkyl) bedeuten und die Reste R', die gleich oder verschieden sein können, Alkyl, Aryl, Arylalkyl oder Alkylaryl darstellen, wobei diese Reste durch O- oder S- Atome oder die Gruppe - NR" unterbrochen sein können und einen oder mehrere Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, und/oder einem davon abgeleiteten Oligomeren, in einer Menge von 0 bis 60 Mol-%, bezogen auf die Gesamtmolzahl der (monomeren) Ausgangskomponenten und
4. gegebenenfalls einem oder mehreren im Reaktionsmedium löslichen, schwerflüchtigen Oxid eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten;
   durchführt;
   b) dass man zu diesem hydrolytischen Kondensat ein organisches Präpolymer zugibt, wobei die reagierenden vernetzbaren Gruppen des Restes R'" und/oder des vernetzbaren Substituenten am Rest R"' mit denen am Präpolymer gleichnamig sind, und das Präpolymer in einer Menge von 2 bis 70 Mol-%, bezogen auf die Gesamtmolzahl der (monomeren) Ausgangskomponenten, zusetzt;
   c) die so erhaltene Beschichtungslösung auf ein Substrat aufbringt und anschliessend aushärtet.

   Weitere Angaben und Ausführungen zu den funktionellen Beschichtungen b) können der EP-A 0 610 831 und der EP-A 0 358 011 entnommen werden.

Die funktionelle Beschichtung wird vorteilhaft durch einen Sol-Gel-Prozess auf den mit der Vorbehandlungsschicht versehenen Reflektorkörper aufgebracht. Die funktionelle Beschichtung kann durch Eintauchen, Aufpinseln, Aufwalzen, Schleudern, Spritzen, sogenanntes Coil-Coating usw. auf das Substrat aufgebracht werden. In der Regel werden in der funktionellen Beschichtung Silane verwendet. Werden die Silane teilweise durch Verbindungen zu ersetzen, welche anstelle des Siliciums Titan, Zirkon oder Aluminium enthalten, kann die Härte, Dichte und Brechungsindex der funktionellen Beschichtung variiert werden. Die Härte der funktionellen Beschichtung kann ebenso durch die Verwendung verschiedener Silane gesteuert werden, beispielsweise durch Ausbildung eines anorganischen Netzwerkes zur Steuerung der Härte und thermischen Stabilität oder durch Verwendung eines organischen Netzwerkes zur Steuerung der Elastizität. Eine funktionelle Beschichtung, welche zwischen den anorganischen und organischen Polymeren eingeordnet werden kann, wird beispielsweise über den Sol-Gel-Prozess durch gezielte Hydrolyse und Kondensation von Alkoxiden, vorwiegend des Siliciums, Aluminiums, Titans und Zirkons auf den Aluminiumsubstraten aufgebracht werden. Durch den Prozess wird ein anorganisches Netzwerk aufgebaut und über entsprechend derivatisierte Kieselsäure-Ester können zusätzlich organische Gruppen eingebaut werden, die einerseits zur Funktionalisierung und andererseits zur Ausbildung definierter organischer Polymersysteme genutzt werden. Im weiteren kann der Gel-Film auch durch ElektroTauchlackierung nach dem Prinzip der kataphoretischen Abscheidung einer amin- und organisch modifizierten Keramik abgeschieden werden.

Nach dem Beschichten der anodisierten Oberfläche des Reflektorkörpers mit der funktionellen Beschichtung kann die Beschichtung gehärtet werden. Das Härten kann durch Strahlung, wie UV-Strahlung, Elektronenstrahlung oder Laserstrahlung und/oder bei erhöhter Temperatur erfolgen. Die Temperatur kann durch Konvektion oder Wärmestrahlung, wie IRund/oder UV-Strahlung, oder durch eine Kombination von Konvektion und Strahlung, wie UV- und/oder IR-Strahlung oder durch Heissgas, wie heisser Luft, erhöht werden. Die Temperatur, gemessen an der unter der funktionellen Beschichtung liegenden Schicht, z.B. der Metall-, wie Aluminiumschicht, ist beispielsweise grösser als 110° C, zweckmässig grösser als 150° C und vorzugsweise zwischen 150° C und 220° C. Die erhöhte Temperatur kann beispielsweise während 10 sec. bis 120 min. auf den Körper einwirken. Die Konvektionserwärmung kann zweckmässig durch eine Beaufschlagung mit erwärmten Gasen, wie Luft, Stickstoff, Edelgase oder Gemischen daraus erfolgen.

Die Schicht b), d.h. die funktionelle Beschichtung, bewirkt eine Einebnung oder Glättung der Oberfläche. Es werden beispielsweise Werte Rₐ von kleiner als 0,01 µm und bevorzugt von kleiner als 0,02 µm erzielt. Die Oberflächenrauhigkeit Rₐ ist definiert in wenigstens einer der DIN-Vorschriften 4761 bis 4768.

Die funktionelle Beschichtung b) kann eine einzelne Schicht d.h. eine Monoschicht oder auch eine Mehrfachschicht, wie eine Doppelschicht, Dreifachschicht usw. darstellen. Die Mehrfachschichten, wie die Doppelschichten, resp. Dreifachschichten usw. können alle aus demselben Material oder aus unterschiedlichen Materialien, jeweils ausgewählt aus den zur funktionellen Beschichtungen b) genannten Materialien, angewendet werden. Die Doppelbeschichtung, Dreifachbeschichtung usw. kann erzeugt werden beispielsweise durch aufbringen einer ersten Schicht, vorhärten oder aushärten der ersten Schicht, aufbringen der zweiten Schicht und aushärten der zweiten Schicht. Eine nur vorgehärtete erste Schicht kann gleichzeitig mit der zweiten Schicht aushärten. Wird gegenbenfalls eine dritte Schicht aufgebracht, kann die erste und die zweite Schicht ausgehärtet oder vorgehärtet werden und die Aushärtung kann nur die dritte Schicht betreffen oder mit der dritten Schicht können -- soweit noch erforderlich -- die darunter liegenden Schichten ausgehärtet werden. Gleiches gilt sinngemäss für weitere, wie vierte usw. Schichten. Mit Vorhärten sind beispielsweise Verfahren, wie trocknen lassen, vortrocknen unter Wärme- oder Strahlungseinfluss oder Strahlungs- oder Hitzebehandlungen umfasst. Die zweckmässige Dicke einer Doppel- resp. Dreifachschicht liegt im oben angegebenen Bereich von 1 bis 20 µm, wobei jede einzeln aufgetragene Schicht beipielsweise eine Dicke von 2 bis 5 µm aufweisen kann.

Die Reflexionsschicht c) stellt eine einzelne reflektierende Schicht und insbesondere ein Mehrschichtsystem dar, wobei das Mehrschichtsystem eine reflektierende Schicht aufweist, wie z.B. eine Schicht aus Aluminium, Silber, Kupfer, Gold, Chrom, Nickel oder Legierungen, beispielsweise enthaltend überwiegend wenigstens eines der genannten Metalle. Die Dicke der Reflexions-Schicht kann beispielsweise 10 bis 200 nm (Nanometer) betragen. Auf dieser metallischen Schicht kann eine oder können mehrere transparente Schutzschichten aufgebracht sein, z.B. bestehend aus oder enthaltend Oxide, Nitride, Fluoride usw. von Alkalimetallen, Erdalkalimetallen, Halbmetallen und/oder Übergangsmetallen und/oder Lanthanoiden. Es können auch zwei oder mehrere transparente Schutzschichten aus genannten Materialien mit unterschiedlichen Brechungsindizes zur Verstärkung des Reflexionsgrades als Folge partieller Lichtreflexion an der Phasengrenze der transparenten Schutzschichten vorgesehen werden. Die einzelnen Schutzschichten sind typischerweise von 1, vorzugsweise von 40, bis 200 nm dick und weisen insbesondere eine Dicke auf, die einem Bruchteil, z.B. λ/2 oder λ/4 der Wellenlänge der zu reflektierenden Strahlung entspricht. Bevorzugt ist ein Mehrschichtsystem enthaltend eine reflektierende Schicht und wenigstens eine transparente Schutzschicht. Bevorzugt sind Schichtsysteme aus einer Metallreflexionsschicht, darauf eine transparente λ/4-Schutzschicht mit niedrigem Brechungsindex und darauf eine transparente λ /4-Schutzschicht mit hohem Brechungsindex. Beispiele dafür sind Aluminium als reflektierende Metallschicht, SiO₂ oder MgF₂ als niedrigbrechende λ/4-Schicht und Ti-Oxid oder Ti,Pr-Oxid als hochbrechende λ/4-Schicht. Eine noch höhere Reflexion kann mit mehreren λ /4-Doppelschichten, alternierend mit niedrigerem und höherem Brechungsindex, erreicht werden.

Die Reflexionsschicht c) und dabei die reflektierende Schicht oder die reflektierende Schicht und weiteren Schichten des Mehrschichtsystems, können beispielsweise durch Gas- oder Dampfphasenabscheidung im Vakuum, (physical vapor deposition, PVD), durch thermische Verdampfung, durch Elektronenstrahlverdampfung, mit und ohne Ionenunterstützung, durch Sputtern, insbesondere durch Magnetronsputtering oder durch chemische Gasphasenabscheidung (chemical vapor deposition, CVD) mit und ohne Plasmaunterstützung, auf den Reflektorkörper aufgebracht werden.

Die Reflexionsschicht c) auf dem Reflektorkörper, über der Schicht b), dient insbesondere zur Reflexion von Energie in Form von Wellen und/oder Teilchen, zweckmässig zur Reflexion der Strahlung, mit Wellenlängen im optischen Bereich und vorzugsweise des sichtbaren Lichtes, insbesondere mit Wellenlängen zwischen 400 bis 750 nm.

Die Reflexionsschicht c) auf dem Reflektionskörper führt insbesondere zu Reflektoren, deren beschichtete Oberflächen eine Gesamtreflexion, gemessen als Reflexionswert nach DIN 5036, von zweckmässig 90% und höher, und insbesondere von 94% bis 96% aufweisen. Die reflektierende Schicht resp. das Mehrschichtsystem kann beispielsweise in einer Prozessfolge auf die Oberfläche gebracht werden, welche -- fallweise die Schritte der Entfettung und Reinigung --, das Einschleusen des die zu beschichtende Oberfläche enthaltenden Gegenstandes in eine Vakuumanlage, das Reinigen beispielsweise durch Sputtern, durch Entladung (glow discharge) etc., gegebenenfalls in einer Vorstufe die Abscheidung einer Haftschicht, in erster Stufe die Abscheidung wenigstens einer lichtreflektierenden und insbesondere metallischen Schicht, und in zweiter und gegebenenfalls dritter, vierter usw. Stufen, die Abscheidung einer transparenten Schicht oder gegebenenfalls zweier, dreier usw. transparenten Schichten und des Ausschleusens des beschichteten Gegenstandes aus dem Vakuum enthält.

Am erfindungsgemässen Reflektor kann zwischen der funktionellen Beschichtung b) und der Reflexions-Schicht c) zusätzlich eine -- z.B. oxidhaltige oder nitridhaltige -- Haftschicht angeordnet sein. Die Haftschicht kann z.B. eine Keramikschicht sein. Solche Schichten können beispielsweise Verbindungen der Formeln SiOₓ, wobei x eine Zahl von 1 bis 2 ist, oder Al_{y}O_{z}, wobei y/z eine Zahl von 0,2 bis 1,5 darstellt, enthalten oder daraus bestehen. Bevorzugt ist eine Haftschicht enthaltend oder bestehend aus SiOₓ, wobei x obige Bedeutung hat. Die oxidhaltige Haftschicht ist typischerweise 1 bis 200 nm, vorzugsweise 1 bis 100 nm, dick. Die oxidhaltige Haftschicht kann beispielsweise durch Gas-oder Dampfphasenabscheidung im Vakuum (physical vapour deposition), durch thermische Verdampfung, durch Elektronenstrahlverdampfung, mit und ohne Ionenunterstützung, durch Sputtern, insbesondere durch Magnetronsputtering, oder durch chemische Gasphasenabscheidung (chemical vapour deposition), mit und ohne Plasmaunterstützung, auf der erfindungsgemässen Oberfläche oder der bereits aufgebrachten, vorherigen Schicht abgschieden werden.

Die erfindungsgemässen Reflektoren mit Oberflächen, die eine solche reflektierende Schicht oder ein solches Mehrschichtsystem tragen, weisen eine hervorragende Reflexion, beispielsweise für elektromagnetische Strahlung und insbesondere elektromagnetische Strahlung im optischen Bereich, auf. Der optische Bereich umfasst z.B. Infrarot, den Bereich des sichtbaren Lichtes, des Ultravioletts usw. Bevorzugtes Anwendungsgebiet ist der Bereich der elektromagnetischen Strahlung und dabei des sichtbaren Lichtes.

Die Reflexion der Strahlung kann je nach Oberfläche gerichtet, gestreut oder eine Kombination davon sein. Demgemäss eignen sich die Reflektoren nach vorliegender Erfindung beispielsweise als Reflektoren, wie Reflektoren z.B. für Strahlungsquellen oder optische Geräte. Solche Strahlungsquellen sind z.B. Beleuchtungskörper, wie Bildschirmarbeitsplatz-Leuchten, Primärleuchten, Sekundärleuchten, Rasterleuchten, Lichtleitelemente, Lichtdecken, Lichtumlenklamellen oder Wärmestrahler. Die Reflektoren können z.B. auch Spiegel oder Innenspiegel von optischen Geräten, Beleuchtungskörpern oder Wärmestrahlern sein.

Beispielsweise bei Walzprodukten, wie Folien, Bändern oder Blechen, oder bei Laminaten mit einer Aluminiumschicht, werden einzelne oder vorzugsweise alle Beschichtungen in kontinuierlichen Verfahren, in der Regel sogenannten Band- oder Durchlaufverfahren, auch coilcoating genannt, aufgetragen, resp. abgeschieden. Für die Erzeugung der Schicht a) können beispielsweise die Verfahren zur anodischen Oxidation von Aluminium angewendet werden. Auch die Schicht b), die funktionelle Beschichtung, wie eine Sol-Gel-Schicht, kann in kontinuierlichen Verfahren aufgetragen werden, wobei das Sol durch Tauchen, Spritzen oder im sogenannten Coil-Coating auf die zu behandelnde Oberfläche aufgetragen wird und durch anschliessende Strahlungs- und/oder Wärmebehandlung im Durchlaufofen getrocknet resp.

gehärtet wird. Schliesslich kann die Schicht c) oder das Mehrschichtsystem durch Bedampfen, Sputtern, jeweils insbesondere im Vakuum, usw. abgeschieden werden.

Die Reflektoren nach vorliegender Erfindung weisen z.B. eine um 5 bis 50 % verbesserte Reflexion auf. Die Reflektoren, beispielsweise in Form von Folien, Bändern oder Blechen, lassen sich auch umformen, wobei kaum Rissbildung sichtbar wird. Die Reflektoren nach der Erfindung weisen eine gute Schutzwirkung gegen chemischen, physikalischen und dabei besonders mechanischen Abbau, wie mechanische Beschädigung, Abrieb, Korrosion usw. auf. Mechanische Beschädigungen können beispielsweise bei der Reinigung von Oberflächen, d.h. den reflektierenden Schichten, durch Staub, Sand und dergleichen, der zwischen dem Reinigungsgerät und der Oberfläche eingeschlossen ist oder durch das Reinigungsgerät selbst, d.h. einen Lappen, Wischer, Bürste etc., erfolgen. Korrosion kann durch Feuchtigkeit, Gase oder Dämpfe entstehen, welche die Oberfläche angreifen oder die Schichten unterwandern und ablösen oder chemisch verändern.

Vorliegende Erfindung umfasst auch die Verwendung von Reflektoren enthaltend eine gegen mechanische und chemische Angriffe resistente Oberfläche mit hoher Gesamtreflexion zur Reflexion von Strahlungen im optischen Bereich, d.h. von Tages- und Kunstlicht, von Wärmestrahlung, von sichtbarem Licht, Ultraviolettlicht etc. Besondere Bedeutung hat die Verwendung der Reflektoren für die Reflexion von sichtbarem Licht, insbesondere von Tagesoder Kunstlicht, einschliesslich UV-Licht. Die erfindungsgemässsen Reflektoren sind beispielsweise geeignet als Reflektoren oder Lichtleitelemente in der Licht- und Leuchtentechnik, wie z.B. als Reflektoren in Bildschirmarbeitsplatz-Leuchten, Primärleuchten, Sekundärleuchten, Rasterleuchten, Lichtleitelemente, Lichtdecken oder als Lichtumlenklamellen usw.

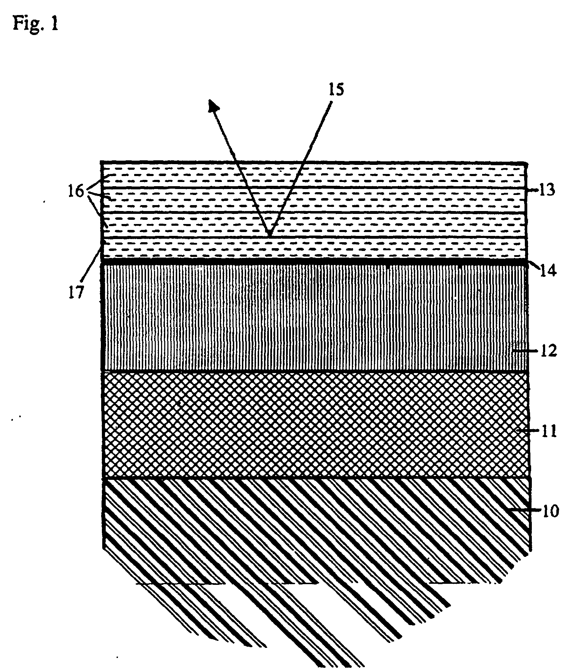

Die Figur 1 zeigt schematisch einen Schnitt durch einen erfindungsgemässen Reflektor. Auf einem Reflektorkörper (10) -- beispielsweise einem Bandmaterial aus Metall, wie Aluminium -- ist als Oberflächenschicht ein Schichtsystem aus einer Vorbehandlungschicht (11), einer funktionellen Beschichtung (12) und einer metallischen Reflexionsschicht (13) angeordnet. Die Vorbehandlungschicht (11) kann durch anodische Oxidation direkt aus dem Material des Reflektorkörpers (10) gebildet sein. An der Oberfläche der Vorbehandlungschicht (11), gegen die funktionelle Schicht (12) weisend, können sich Rauhigkeiten bilden. Die funktionelle Schicht (12) vermag diese Rauhigkeiten auszuebnen und formt eine glatte Oberfläche für die Abscheidung der metallhaltigen Reflexionsschicht (13). Die metallhaltige Reflexionsschicht (13), resp. ein Schichtsystem aus einer Metallreflexionsschicht (17) und Schutzschichten (16), wird auf der funktionellen Schicht (12) abgeschieden. Ein Lichtstrahl 15 durchdringt beispielhaft eingezeichnete, inbesondere transparente, Schutzschichten (16) und wird an der Metallreflexionsschicht (17) zurückgeworfen. Fallweise kann zwischen der funktionellen Beschichtung (12) und der metallischen Reflexionsschicht (13) eine Haftschicht (14) angeordnet sein.

### Beispiele:

1. In einem Bandverfahren wird eine Vorbehandlungschicht auf ein Aluminiumband aufgebracht. Dazu wird ein Aluminiumband (Al 99,8, Ra 0,08 µm) mit 500 mm Breite und 0,3 mm Dicke kontinuierlich bei 40 m/min anodisiert. Dabei wurden folgende Stufen durchlaufen durchlaufene Bäder):
   a) Entfettung bei pH 9 - 9,5, bei ca. 50°C und Bonder V6150/01,
   b) Spülen mit Leitungswasser (Raumtemperatur),
   c) Anodisieren in 20% H₂SO₄ bei ca. 85°C und 20V Spannung,
   d) Spülen in Leitungswasser bei ca.50°C und
   e) Spülen in entionisiertem Wasser bei ca.85°C.

   Das mit der Vorbehandlungsschicht versehene Band kann aufgeteilt werden und anschliessend kann auf der Vorbehandlungschicht die funktionelle Schicht aufgebracht werden.
2. Das mit der Vorbehandlungschicht versehene, in vorliegendem Beispiel das voranodisierte Band, wird bei 40 m/min in einem Coil-coating-Verfahren und gegenlaufenden Tauch- und Auftragswalzen mit der funtionellen Beschichtung lackiert und in Banddurchlauföfen bei einen Ofentemperatur von 200°C bis 250°C während ca. 10 bis 15 sec. getrocknet. Die Metalltemperatur (gemessen mit Temperaturmessstreifen auf nicht lackiertem Substrat) betrug zwischen 195°C bis 216°C.

Das aufgespulte Band zeigt keinerlei Verblockung und weist eine Härte gemessen nach der Methode "Bleistiftverfahren nach Wolf Wilburn" SNV 37113, SIS 18 41 87, NEN 5350, MIL C 27 227, ECCA Test Methods, von 10-11 (2H-3H) auf bei ~ 5 µm Schichtdicke.

Die Haftfestigkeit wurde gemessen im Gitterschnitt (ISO 2409). Nach dem Falzen zeigte die Schicht regelmässige Aufrisse parallel zum Falzknie jedoch keinerlei Delamination.

Das nach dem Sol-Gel-Verfahren mit der funktionellen Beschichtung beschichtete Band wird mit einer reflextionserhöhenden PVD-Beschichtung (Antiflex B® der Fa. Balzers) versehen und weist anschliessend folgende Reflextionswerte nach DIN 5036 Teil 3 auf:
Gesamtreflexion > 95% und gestreute Reflexion <1%.
Die PVD- Schicht ist mit dem Substrat fest verbunden und löst sich auch bei starkem Umformen, wie Falzen, nicht von der funktionellen Beschichtung.

## Patentansprüche

1. Reflektor, enthaltend eine gegen mechanische und chemische Angriffe resistente Oberfläche mit hoher Gesamtreflexion, wobei der Reflektorkörper (10) wenigstens eine freie Oberfläche aus Aluminium oder einer Aluminiumlegierung aufweist und auf der freien Oberfläche, als Oberflächenschicht, ein Schichtsystem aus
b) einer funktionellen Beschichtung (12) mit organofunktionellen Silanen einer Metallverbindung und darauf abgeschieden
c) eine metallhaltigen Reflexionsschicht (13) enthält,
und die Schicht b) eine Einebnung und eine Erhöhung der mechanischen Beständigkeit der darüber liegenden Schicht c) bewirkt,
**dadurch gekennzeichnet, dass** das Schichtsystem
a) eine Vorbehandlungsschicht (11), die eine anodisch erzeugte Oxidschicht ist, eine Dicke von wenigstens 20 nm (Nanometer) und eine Dicke von höchstens 1500 nm aufweist, wobei die Schicht a) auf dem Reflektorkörper aufgebracht ist und die Haftfestigkeit zu den darüberliegenden Schichten b) und c) erhöht
und
die funktionelle Beschichtung b) einer Dicke von 0,5 bis 20 µm aufweist und dass die funktionelle Beschichtung b) aus einer oder mehreren Schichten aus Materialien ist, die erhalten worden sind dadurch, daß man (i) eine hydrolytische Kondensation, gegebenenfalls in Gegenwart eines Kondensationskatalysators und/oder üblichen Additiven von folgenden Komponenten:
1. mindestens einem vernetzbaren organofunktionellen Silan der Formel (II):
R"' ₘSiX₍₄₋ₘ₎ (II)
in der die Gruppen X, die gleich oder verschieden sein können, Wasserstoff, Halogen, Alkoxy, Acyloxy, Alkylcarbonyl, Alkoxycarbonyl oder -NR" ₂ (R" = H und /oder Alkyl) bedeuten und die Reste R"', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S- Atome oder die Gruppe - NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1,2 oder 3 hat, und/oder einem davon abgeleiteten Oligomeren, wobei der Rest R"' und/oder der Substituent ein vernetzbarer Rest bzw. Substituent sein muss, in einer Menge von 10 bis 95 Mol-%, bezogen auf die Gesamtmolzahl der (monomeren) Ausgangskomponenten;
2. mindestens einer Metallverbindung der allgemeinen Formel III:
MeR_{y} (III)
in welcher Me ein Metall, ausgewählt aus der Gruppe Al, Zr, Ti ist, wobei y im Falle von Aluminium 3 und im Falle von Ti und Zr 4 ist und die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und /oder einem davon abgeleiteten Oligomeren und/oder einem gegebenenfalls komplexierten Aluminiumsalz einer anorganischen oder organischen Säure, in einer Menge von 5 bis 75 Mol-%, bezogen auf die Gesamtmolzahl der (monomeren) Ausgangskomponenten,
3. gegebenenfalls mindestens einem nicht vernetzbaren organofunktionellen Silan der Formel I:
R'ₘSiX₍₄₋ₘ₎ (I)
in der die Gruppen X, die gleich oder verschieden sein können, Wasserstoff, Halogen, Hydroxy, Alkoxy, Acyloxy, Alkylcarbonyl, Alkoxycarbonyl oder -NR"₂(R" = H und /oder Alkyl) bedeuten und die Reste R', die gleich oder verschieden sein können, Alkyl, Aryl, Arylalkyl oder Alkylaryl darstellen, wobei diese Reste durch O- oder S-Atome oder die Gruppe -NR" unterbrochen sein können und einen oder mehrere Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, und/oder einem davon abgeleiteten Oligomeren, in einer Menge von 0 bis 60 Mol-%, bezogen auf die Gesamtmolzahl der (monomeren) Ausgangskomponenten und
4. gegebenenfalls einem oder mehreren im Reaktionsmedium löslichen, schwerflüchtigen Oxid eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten; durchführt;
ii) dass man zu diesem hydrolytischen Kondensat ein organisches Präpolymer zugibt, wobei die reagierenden vemetzbaren Gruppen des Restes R''' und/oder des vernetzbaren Substituenten am Rest R"' mit denen am Präpolymer gleichnamig sind, und das Präpolymer in einer Menge von 2 bis 70 Mol-%, bezogen auf die Gesamtmolzahl der (monomeren) Ausgangskomponenten, zusetzt;
iii) die so erhaltene Beschichtungslösung auf ein Substrat aufbringt und anschliessend aushärtet.

2. Reflektor nach Anspruch 1, **dadurch gekennzeichnet, dass** die Vorbehandlungsschicht a) eine Dicke von wenigstens 50 nm, bevorzugt von wenigstens 100 nm und vorteilhaft von wenigstens 150 nm aufweist.

3. Reflektor nach Anspruch 1, **dadurch gekennzeichnet, dass** die Vorbehandlungsschicht a) eine Dicke von höchstens 200 nm aufweist.

4. Reflektor nach Anspruch 1, **dadurch gekennzeichnet, dass** die funktionele Beschichtung b) eine Dicke von 2 bis 10 µm und bevorzugt von 2 bis 5 µm aufweist.

5. Reflektor nach Anspruch 1, **dadurch gekennzeichnet, dass** die funktionelle Beschichtung b) eine einzelne Schicht oder eine Mehrfachschicht darstellt und die Mehrfachschichten alle aus demselben Material oder aus unterschiedlichen Materialien sind, jeweils ausgewählt aus den zur funktionellen Beschichtung b) genannten Materialien.

6. Reflektor nach Anspruch 1, **dadurch gekennzeichnet, dass** die Reflexions-Schicht c) ein Mehrschichtsystem aus einer reflektierenden Schicht und darauf abgeschieden transparenten Schutzschichten mit unterschiedlichen Brechungsindizes ist.

7. Reflektor nach Anspruch 1, **dadurch gekennzeichnet, dass** die Reflexions-Schicht c) ein Mehrschichtsystem aus einer reflektierenden Schicht und darauf abgeschieden transparenten Schutzschichten mit unterschiedlichen Brechungsindizes ist und die Reflexionsschicht eine Dicke von 10 bis 200 nm und jede der transparenten Schutzschichten eine Dicke von 40 bis 200 aufweist.

8. Reflektor nach Anspruch 1, **dadurch gekennzeichnet, dass** die Reflexionsschicht c) als reflektierende Schicht ein Metall der Reihe Al, Ag, Cu, Au, Cr, Ni oder eine Legierung enthaltend überwiegend wenigstens eines der Metalle, enthält oder daraus besteht.

9. Reflektor nach Anspruch 1, **dadurch gekennzeichnet, dass** zwischen der funktionellen Beschichtung b) und der Reflexions-Schicht c) eine Haftschicht angeordnet ist.

10. Verfahren zur Herstellung eines Reflektors nach Anspruch 1, durch Anodisieren der Oberfläche des Reflektorträgers, beschichten mit einem Sol-Gel-Film, härten des Sol-Gel-Films und aufbringen der Reflexionsschicht, **dadurch gekennzeichnet, dass** das Verfahren kontinuierlich als Bandverfahren durchgeführt wird.

11. Verfahren zur Herstellung eines Reflektors nach Anspruch 1, durch Anodisieren der Oberfläche des Reflektorträgers, beschichten mit einem Sol-Gel-Film, härten des Sol-Gel-Films und aufbringen der Reflexionsschicht, **dadurch gekennzeichnet, dass** beim Anodisieren eine anodische Oxidschicht in einem rücklösenden Elektrolyten aufgebaut wird, wobei der rücklösende Elektrolyt Schwefelsäure, Oxalsäure, Phosphorsäure, Chromsäure oder Mischungen davon enthält.

12. Verfahren zur Herstellung eines Reflektors nach Anspruch 1, durch Anodisieren der Oberfläche des Reflektorträgers, beschichten mit einem Sol-Gel-Film, härten des Sol-Gel-Films und aufbringen der Reflexionsschicht, **dadurch gekennzeichnet, dass** beim Anodisieren eine anodische Oxidschicht in einem nicht rücklösenden Elektrolyten aufgebaut und nicht verdichtet wird.

13. Verfahren zur Herstellung eines Reflektors nach Anspruch 1, durch Anodisieren der Oberfläche des Reflektorträgers, beschichten mit einem Sol-Gel-Film, härten des Sol-Gel-Films und aufbringen der Reflexionsschicht, **dadurch gekennzeichnet, dass** das Härten des Sol-Gel-Filmes bei erhöhter Temperatur erfolgt, wobei die Temperatur, gemessen an der unter der Sol-Gel-Schicht liegenden Aluminiumschicht, grösser als 110° C, zweckmässig grösser als 150° C und vorzugsweise zwischen 150° C und 220° C, beträgt und die erhöhte Temperatur während 10 sec. bis 120 min. auf den Körper einwirkt.

14. Verfahren nach Anspruch 13, **dadurch gekennzeichnet, dass** die erhöhte Temperatur durch UV-Strahlung und IR-Strahlung oder durch IR-Strahlung oder mit Heissgas, vorzugsweise heisser Luft, erzeugt wird.

15. Verfahren zur Herstellung eines Reflektors nach Anspruch 1, durch Anodisieren der Oberfläche des Reflektorträgers, beschichten mit einem Sol-Gel-Film, härten des Sol-Gel-Films und aufbringen der Reflexionsschicht, **dadurch gekennzeichnet, dass** die Reflexionsschicht und dabei die reflektierende Schicht oder die reflektierende Schicht und weitere Schichten eines Mehrschichtsystems, durch Gas- oder Dampfphasenabscheidung im Vakuum aufgebracht werden.

16. Verwendung der Reflektoren nach Anspruch 1 als Reflektoren oder Lichtleitelemente für Kunstlicht und Tageslicht.

17. Verwendung der Reflektoren nach Anspruch 16 in der Licht- und Leuchtentechnik als Reflektoren in Bildschirmarbeitsplatz-Leuchten, Primärleuchten, Sekundärleuchten, Rasterleuchten, Lichtdecken oder als Lichtumlenklamellen.

18. Verfahren zur Herstellung eines Reflektors nach Anspruch 1, durch Anodisieren der Oberfläche des Reffektorträgers, beschichten mit einem Sol-Gel-Film, härten des Sol-Gel-Films und aufbringen der Reflexionsschicht, **dadurch gekennzeichnet, dass** die Reflexionsschicht und dabei die reflektierende Schicht oder die reflektierende Schicht und weitere Schichten eines Mehrschichtsystems, durch Gas- oder Dampfphasenabscheidung im Vakuum aufgebracht werden.

19. Verwendung der Reflektoren nach Anspruch 1 als Reflektoren oder Lichtleitelemente für Kunstlicht und Tageslicht

20. Verwendung der Reflektoren nach Anspruch 19 in der Licht- und Leuchtentechnik als Reflektoren in Bildschirmarbeitsplatz-Leuchten, Primärleuchten, Sekundärleuchten, Rasterleuchten, Lichtdecken oder als Lichtumlenklamellen.

## Claims

1. Reflector containing a surface with high total reflection resistant to mechanical and chemical attack, the reflector body (10) having at least one free surface made of aluminium or an aluminium alloy and being provided on the free surface with a surface layer in the form of a layer system consisting of
b) a functional coating (12) with organofunctional silanes of a metal compound and
c) a metal-containing reflective layer (13) deposited thereon,
and the layer b) levelling and increasing the mechanical resistance of the layer c) lying on top,
**characterised in that** the layer system
a) has a pre-treatment layer (11) which is an oxide layer produced by anodising having a thickness of at least 20 nm (nanometres) and no more than 1500 nm, the layer a) being applied to the reflector body and increasing adhesion to the layers
b) and c) lying on top
and
the functional coating b) has a thickness of 0.5 to 20 µm and the functional coating b) consists of one or more layers of materials obtained by
(i) carrying out hydrolytic condensation, possibly in the presence of a condensation catalyst and/or conventional additives of the following components:
1. at least one crosslinkable organofunctional silane of formula (II):
R"'ₘSiX₍₄₋ₘ₎ (II)
in which the groups X, which may be identical or different, represent hydrogen, halogen, alkoxy, acyloxy, alkyl carbonyl, alkoxy carbonyl or -NR"₂ (R" = H and/or alkyl) and the residues R"', which may be identical or different, represent alkyl, alkenyl, alkynyl, aryl, aryl alkyl, alkyl aryl, aryl alkenyl, alkenyl aryl, aryl alkynyl or alkynyl aryl, wherein these residues may be interrupted by O- or S-atoms or the group -NR" and may bear one or more substituents from the group consisting of halogens and possibly substituted amino, amide, aldehyde, keto, alkyl carbonyl, carboxy, mercapto, cyano, hydroxy, alkoxy, alkoxy carbonyl, sulphonic acid, phosphoric acid, acryloxy, methacryloxy, epoxy or vinyl groups and m has the value 1, 2 or 3 and/or an oligomer derived therefrom, wherein the residue R"' and/or the substituent must be a crosslinkable residue or substituent, in a quantity of 10 to 95 mole % in relation to the total number of moles of the (monomeric) starting components;
2. at least one metal compound of general formula III:
MeR_{y} (III)
in which Me is a metal selected from the group Al, Zr or Ti, wherein y is 3 in the case of aluminium and 4 in the case of Ti and Zr and the residues R, which may be identical or different, represent halogen, alkyl, alkoxy, acyloxy or hydroxy, wherein the groups just mentioned may be substituted wholly or partially by chelating ligands and/or an oligomer derived therefrom and/or a possibly complexed aluminium salt of an inorganic or organic acid, in a quantity of 5 to 75 mole % in relation to the total number of moles of the (monomeric) starting components;
3. possibly at least one non-crosslinkable organofunctional silane of formula I:
R'ₘSiX₍₄₋ₘ₎ (I)
in which the groups X, which may be identical or different, represent hydrogen, halogen, hydroxy, alkoxy, acyloxy, alkyl carbonyl, alkoxy carbonyl or -NR"₂ (R" = H and/or alkyl) and the residues R', which may be identical or different, represent alkyl, aryl, aryl alkyl or alkyl aryl, wherein these residues may be interrupted by O- or S- atoms or the group -NR" and may bear one or more substituents from the group consisting of halogens and possibly substituted amide, aldehyde, keto, alkyl carbonyl, carboxy, cyano, alkoxy or alkoxy carbonyl groups and m has the value 1, 2 or 3 and/or an oligomer derived therefrom, in a quantity of 0 to 60 mole % in relation to the total number of moles of the (monomeric) starting components, and
4. possibly one or more non-volatile oxides of an element of the main groups Ia to Va or subgroups IIb, IIIb, Vb to VIIIb of the periodic system soluble in the reaction medium, with the exception of Al, and/or one or more compounds of one of these elements soluble in the reaction medium and forming a non-volatile oxide under the reaction conditions, in a quantity of 0 to 70 mole % in relation to the total number of moles of the (monomeric) starting components;
ii) adding an organic prepolymer to this hydrolytic condensate, wherein the reacting, crosslinkable groups of the residue R"' and/or of the crosslinkable substituent on the residue R"' are similar to those on the prepolymer and the prepolymer is added in a quantity of 2 to 70 mole % in relation to the total number of moles of the (monomeric) starting components;
iii) applying the resulting coating solution to a substrate and then curing it.

2. Reflector according to claim 1, **characterised in that** the pre-treatment layer a) has a thickness of at least 50 nm, preferably at least 100 mn and advantageously at least 150 nm.

3. Reflector according to claim 1, **characterised in that** the pre-treatment layer a) has a thickness of no more than 200 nm.

4. Reflector according to claim 1, **characterised in that** the functional coating b) has a thickness of 2 to 10 µm and preferably 2 to 5 µm.

5. Reflector according to claim 1, **characterised in that** the functional coating b) is an individual layer or a multi-layer and the multi-layers all consist of the same material or of different materials, selected in each case from the materials mentioned for the functional coating b).

6. Reflector according to claim 1, **characterised in that** the reflective layer c) is a multi-layer system consisting of a reflecting layer and transparent protective layers with different refractive indices deposited thereon.

7. Reflector according to claim 1, **characterised in that** the reflective layer c) is a multi-layer system consisting of a reflective layer and transparent protective layers with different refractive indices deposited thereon and the reflective layer has a thickness of 10 to 200 nm and each of the transparent protective layers has a thickness of 40 to 200.

8. Reflector according to claim 1, **characterised in that** the reflective layer c) serving as a reflecting layer contains or consists of a metal from the series Al, Ag, Cu, Au, Cr, Ni or an alloy containing predominantly at least one of these metals.

9. Reflector according to claim 1, **characterised in that** an adhesive layer is arranged between the functional coating b) and the reflective layer c).

10. Process for the production of a reflector according to claim 1, by anodising the surface of the reflector support, coating it with a sol-gel film, curing the sol-gel film and applying the reflective layer, **characterised in that** the process is carried out as a continuous process.

11. Process for the production of a reflector according to claim 1, by anodising the surface of the reflector support, coating it with a sol-gel film, curing the sol-gel film and applying the reflective layer, **characterised in that** an anodic oxide layer is formed in a redissolving electrolyte during anodising, the redissolving electrolyte containing sulphuric acid, oxalic acid, phosphoric acid, chromic acid or mixtures thereof.

12. Process for the production of a reflector according to claim 1, by anodising the surface of the reflector support, coating it with a sol-gel film, curing the sol-gel film and applying the reflective layer, **characterised in that** an anodic oxide layer is formed in a non-redissolving electrolyte during anodising and is not sealed.

13. Process for the production of a reflector according to claim 1, by anodising the surface of the reflector support, coating it with a sol-gel film, curing the sol-gel film and applying the reflective layer, **characterised in that** the sol-gel film is cured at an elevated temperature, the temperature as measured on the aluminium layer lying under the sol-gel layer being higher than 110°C, advantageously higher than 150°C and preferably between 150°C and 220°C, and the elevated temperature acting on the body for 10 sec to 120 min.

14. Process according to claim 13, **characterised in that** the elevated temperature is produced by UV radiation and infrared radiation or by infrared radiation or by hot gas, preferably hot air.

15. Process for the production of a reflector according to claim 1, by anodising the surface of the reflector support, coating it with a sol-gel film, curing the sol-gel film and applying the reflective layer, **characterised in that** the reflective layer and thus the reflecting layer or the reflecting layer and other layers of a multi-layer system are applied by gaseous-phase deposition or vapour-phase deposition in vacuo.

16. Use of the reflectors according to claim 1 as reflectors or light-conducting elements for artificial light and daylight.

17. Use of the reflectors according to claim 16 in lighting engineering and light production engineering as reflectors in terminal workstation luminaires, primary luminaires, secondary luminaires, louvred luminaires, luminous ceilings or as light deflectors.

18. Process for the production of a reflector according to claim 1, by anodising the surface of the reflector support, coating it with a sol-gel film, curing the sol-gel film and applying the reflective layer, **characterised in that** the reflective layer and thus the reflecting layer or the reflecting layer and other layers of a multi-layer system are applied by gaseous-phase deposition or vapour-phase deposition in vacuo.

19. Use of the reflectors according to claim 1 as reflectors or light-conducting elements for artificial light and daylight.

20. Use of the reflectors according to claim 19 in lighting engineering and light production engineering as reflectors in terminal workstation luminaires, primary luminaires, secondary luminaires, louvred luminaires, luminous ceilings or as light deflectors.

## Revendications

1. Réflecteur, contenant une surface à haute réflexion totale résistant aux attaques mécaniques et chimiques, le corps de réflecteur (10) présentant au moins une surface libre en aluminium ou un alliage d'aluminium et sur la surface libre, comme couche de surface, un système de couches constitué de
b) un revêtement fonctionnel (12) avec des silanes organofonctionnels d'un composé métallique et, déposée sur celui-ci,
c) une couche de réflexion métallisée (13),
et la couche b) provoquant une égalisation et une augmentation de la résistance mécanique de la couche c) reposant sur celle-ci,
**caractérisé en ce que** le système de couches
a) présente une couche de traitement préalable (11), qui est une couche d'oxyde réalisée par anodisation, d'une épaisseur d'au moins 20 nm (nanomètres) et d'une épaisseur d'au plus 1500 nm, la couche a) étant appliquée sur le corps de réflecteur et augmentant l'adhérence aux couches b) et c) situées sur celle-ci
et
le revêtement fonctionnel b) présente une épaisseur de 0,5 à 20 µm et **en ce que** le revêtement fonctionnel b) est constitué d'une ou plusieurs couches de matériaux qui sont obtenus en ceci qu'on réalise i) une condensation hydrolytique, le cas échéant en présence d'un catalyseur de condensation et/ou d'additifs habituels des composants suivants:
1. au moins un silane organofonctionnel réticulable de la formule (II):
R'ₘSiX₍₄₋ₘ₎ (II)
dans laquelle les groupes X, qui peuvent être identiques ou différents, signifient hydrogène, halogène, alcoxy, acyloxy, alkylcarbonyle, alcoxycarbonyle ou -NR"₂ (R" = H et/ou alkyle) et les restes R"', qui peuvent être identiques ou différents, représentent alkyle, alkényle, alkinyle, aryle, arylalkyle, alkylaryle, arylalkenyle, alkenylaryle, arylalkinyle ou alkinylaryle, ces restes pouvant être interrompus par des atomes O ou S ou le groupe -NR" et peuvent porter un ou plusieurs substituants du groupe des halogènes et des groupes le cas échéant substitués amino, amide, aldéhyde, céto, alkylcarbonyle, carboxy, mercapto, cyano, hydroxy, alcoxy, alcoxycarbonyle, acide sulfonique, acide phosphorique, acryloxy, méthacryloxy, époxy ou vinyle et m a la valeur 1, 2 ou 3, et/ou un oligomère dérivé de ceux-ci, le reste R"' et/ou le substituant devant être un reste ou substituant réticulable, dans une quantité de 10 à 95 % molaires, rapportés au nombre total de moles des composants (monomères) de départ;
2. au moins un composé métallique de formule générale III:
MeR_{y} (III)
dans laquelle Me est un métal, choisi dans le groupe Al, Zr, Ti, y étant 3 dans le cas de l'aluminium et 4 dans le cas de Ti et Zr et les restes R, qui peuvent être identiques ou différents, signifient halogène, alkyle, alcoxy, acyloxy ou hydroxy, les groupes venant d'être cités pouvant être entièrement ou partiellement remplacés par des liants chélates et/ou un oligomère dérivés de ceux-ci et/ou un sel d'aluminium le cas échéant complexé d'un acide inorganique ou organique, dans une quantité de 5 à 75 % molaires, rapportés au nombre total de moles des composants (monomères) de départ,
3. le cas échéant, au moins un silane organofonctionnel non réticulable de la formule I:
R'ₘSiX₍₄₋ₘ₎ (I)
dans laquelle les groupes X, qui peuvent être identiques ou différents, signifient hydrogène, halogène, hydroxy, alcoxy, acyloxy, alkylcarbonyle, alcoxycarbonyle ou -NR"₂ (R" = H et/ou alkyle) et les restes R', qui peuvent être identiques ou différents, représentent alkyle, aryle, arylalkyle ou alkylaryle, ces restes pouvant être interrompus par des atomes O ou S ou le groupe -NR" et peuvent porter un ou plusieurs substituants du groupe des halogènes et des groupes le cas échéant substitués amide, aldéhyde, céto, alkylcarbonyle, carboxy, cyano, alcoxy, alcoxycarbonyle et m a la valeur 1, 2 ou 3, et/ou un oligomère dérivé de ceux-ci, dans une quantité de 0 à 60 % molaires, rapportés au nombre total de moles des composants (monomères) de départ et
4. le cas échéant un ou plusieurs oxydes peu volatils, solubles dans le milieu de réaction, d'un élément des groupes principaux Ia à Va ou des groupes secondaires IIb, IIIb, Vb à VIIIb du système périodique, à l'exception de l'Al, et/ou un ou plusieurs composés d'un de ces éléments solubles dans le milieu de réaction, formant un oxyde peu volatil dans les conditions de réaction, dans une quantité de 0 à 70 % molaires, rapportés au nombre total de moles des composants (monomères) de départ;
ii) qu'on ajoute à ce condensat hydrolytique un prépolymère organique, les groupes réticulables qui réagissent du reste R"' et/ou du substituant réticulable sur le reste R"' étant de même nom que ceux sur le prépolymère, et qu'on ajoute le prépolymère dans une quantité de 2 à 70 % molaires, rapportés au nombre total de moles des composants (monomères) de départ;
iii) qu'on applique la solution de revêtement ainsi obtenue sur un substrat et la durcit ensuite.

2. Réflecteur suivant la revendication 1, **caractérisé en ce que** la couche de traitement préalable a) a une épaisseur d'au moins 50 nm, de préférence d'au moins 100 nm et avantageusement d'au moins 150 nm.

3. Réflecteur suivant la revendication 1, **caractérisé en ce que** la couche de traitement préalable a) présente une épaisseur d'au plus 200 nm.

4. Réflecteur suivant la revendication 1, **caractérisé en ce que** le revêtement fonctionnel b) présente une épaisseur de 2 à 10 µm et de préférence de 2 à 5 µm.

5. Réflecteur suivant la revendication 1, **caractérisé en ce que** le revêtement fonctionnel b) est constitué par une couche unique ou une couche multiple et **en ce que** les couches multiples sont toutes du même matériau ou de matériaux différents, respectivement sélectionnés dans les matériaux cités pour le revêtement fonctionnel b).

6. Réflecteur suivant la revendication 1, **caractérisé en ce que** la couche de réflexion c) est un système à plusieurs couches constitué d'une couche réfléchissante et de couches de protection transparentes déposées sur celle-ci ayant des indices de réfraction différents.

7. Réflecteur suivant la revendication 1, **caractérisé en ce que** la couche de réflexion c) est un système à plusieurs couches constitué d'une couche réfléchissante et de couches de protection transparentes déposées sur celle-ci ayant des indices de réfraction différents et **en ce que** la couche de réflexion présente une épaisseur de 10 à 200 nm et chacune des couches de protection transparentes une épaisseur de 40 à 200.

8. Réflecteur suivant la revendication 1, **caractérisé en ce que** la couche de réflexion c) en tant que couche réfléchissante contient ou est constituée d'un métal de la série Al, Ag, Cu, Au, Cr, Ni ou d'un alliage contenant principalement au moins un des métaux.

9. Réflecteur suivant la revendication 1, **caractérisé en ce qu'**une couche d'adhérence est disposée entre le revêtement fonctionnel b) et la couche de réflexion c).

10. Procédé de fabrication d'un réflecteur suivant la revendication 1, par anodisation de la surface du support de réflecteur, revêtement à l'aide d'un film sol-gel, durcissement du film sol-gel et application de la couche de réflexion, **caractérisé en ce que** le procédé est réalisé en continu comme procédé d'enduction de bandes.

11. Procédé de fabrication d'un réflecteur suivant la revendication 1, par anodisation de la surface du support de réflecteur, revêtement à l'aide d'un film sol-gel, durcissement du film sol-gel et application de la couche de réflexion, **caractérisé en ce que**, lors de l'anodisation, on réalise une couche d'oxydation anodique dans un électrolyte provoquant de la redissolution, l'électrolyte provoquant de la redissolution contenant de l'acide sulfurique, de l'acide oxalique, de l'acide phosphorique, de l'acide chromique ou des mélanges de ceux-ci.

12. Procédé de fabrication d'un réflecteur suivant la revendication 1, par anodisation de la surface du support de réflecteur, revêtement à l'aide d'un film sol-gel, durcissement du film sol-gel et application de la couche de réflexion, **caractérisé en ce que**, lors de l'anodisation, on réalise une couche d'oxydation anodique dans un électrolyte ne provoquant pas de redissolution et qu'on ne compacte pas.

13. Procédé de fabrication d'un réflecteur suivant la revendication 1, par anodisation de la surface du support de réflecteur, revêtement à l'aide d'un film sol-gel, durcissement du film sol-gel et application de la couche de réflexion, **caractérisé en ce que** le durcissement du film sol-gel a lieu à température élevée, la température, mesurée sur la couche d'aluminium située en dessous de la couche sol-gel, étant supérieure à 110° C, utilement supérieure à 150° C et de préférence comprise entre 150° C et 220° C et la température élevée agissant pendant.10 s à 120 min sur le corps.

14. Procédé suivant la revendication 13, **caractérisé en ce que** la température élevée est générée par rayonnement UV et rayonnement IR ou par rayonnement IR ou à l'aide de gaz chaud, de préférence d'air chaud.

15. Procédé de fabrication d'un réflecteur suivant la revendication 1, par anodisation de la surface du support de réflecteur, revêtement à l'aide d'un film sol-gel, durcissement du film sol-gel et application de la couche de réflexion, **caractérisé en ce que** la couche de réflexion et ce faisant la couche réfléchissante ou la couche réfléchissante et d'autres couches d'un système à plusieurs couches sont appliquées par dépôt en phase gazeuse ou en phase vapeur sous vide.

16. Utilisation des réflecteurs suivant la revendication 1 comme réflecteurs ou guides de lumière pour lumière artificielle et lumière du jour.

17. Utilisation des réflecteurs suivant la revendication 16 en technique d'éclairage et de luminaires comme réflecteurs dans des luminaires pour poste de travail sur écran, luminaires primaires, luminaires secondaires, luminaires à grille, plafonds lumineux ou comme lamelles de renvoi de la lumière.

18. Procédé de fabrication d'un réflecteur suivant la revendication 1, par anodisation de la surface du support de réflecteur, revêtement à l'aide d'un film sol-gel, durcissement du film sol-gel et application de la couche de réflexion, **caractérisé en ce que** la couche de réflexion et ce faisant la couche réfléchissante ou la couche réfléchissante et d'autres couches d'un système à plusieurs couches sont appliquées par dépôt en phase gazeuse ou en phase vapeur sous vide.

19. Utilisation des réflecteurs suivant la revendication 1 comme réflecteurs ou guides de lumière pour lumière artificielle et lumière du jour.

20. Utilisation des réflecteurs suivant la revendication 19 en technique d'éclairage et de luminaires comme réflecteurs dans des luminaires pour poste de travail sur écran, luminaires primaires, luminaires secondaires, luminaires à grille, plafonds lumineux ou comme lamelles de renvoi de la lumière.
